# EUROPEAN PATENT APPLICATION

(11) **EP 3 470 630 A1**
(43) Date of publication of application: **17.04.2019**
(21) Application number: 18200525.6
(22) Date of filing: 15.10.2018
(51) Int. Cl.: F01D 9/02, F01D 9/06, F01D 25/16, F01D 25/18

(54) **DOUBLE WALL SERVICE TUBE WITH ANNULAR AIRFLOW PASSAGE**

(30) Priority: 13.10.2017 US 201715783398
(71) Applicant: United Technologies Corporation, Farmington, CT 06032 (US)
(72) Inventor: MATTESON, Peter S, South Windsor, CT Connecticut 06074 (US); MADABHUSHI, Ravi K, Longmeadow, MA Massachusetts 01106 (US); PARIMALA, Rajendra Prasad, 500080 Telangana State (IN); ANAND, Vishal, 121002 Haryana (IN)
(74) Representative: Dehns

(57) **Abstract**

A service tube (120) for a gas turbine engine includes an entry end fitting (122); an exit end fitting (124); and a housing (126) that interconnects the entry end fitting (122) and the exit end fitting (124) to define an annulus (130) around an oil tube (128).

## Description

### BACKGROUND

The present disclosure relates to a communication passage for a gas turbine engine and, more particularly, to a service tube with an annular airflow passage.

Gas turbine engines, such as those that power modern commercial and military aircraft, generally include a compressor section to pressurize an airflow, a combustor section to burn a hydrocarbon fuel in the presence of the pressurized air, and a turbine section to extract energy from the resultant combustion gases.

A Mid Turbine Frame (MTF), sometimes referred to as an inter-turbine frame, is located generally between a high pressure turbine stage and a low pressure turbine stage to support one or more bearings, and to transfer bearing loads to an outer engine case structure.

The MTF typically includes a plurality of hollow vanes arranged in a ring-vane-ring structure. The rings define inner and outer boundaries of a core flow path while the vanes are disposed across the flow path. Struts extend through the hollow vanes to interconnect an engine mount ring and a bearing compartment. Both oil and buffer air are supplied to the bearing compartments for the bearings, seals, and buffer air systems through a multiple of conduits, lines, and other passages within one or more of the hollow struts.

### SUMMARY

A service tube for a gas turbine engine according to one disclosed non-limiting embodiment of the present disclosure includes an entry end fitting; an exit end fitting; an oil tube; and a housing that interconnects the entry end fitting and the exit end fitting to define an annulus for the oil tube.

A further aspect of the present disclosure includes that the service tube is located within a mid-turbine frame (MTF).

A further aspect of the present disclosure includes that the service tube is located at least partially within a vane.

A further aspect of the present disclosure includes that the housing is insulated.

A further aspect of the present disclosure includes that the housing is triangular in cross-section.

A further aspect of the present disclosure includes that the entry end fitting includes an oil tube entry stub and an inlet to the annulus.

A further aspect of the present disclosure includes that the oil tube entry stub is transverse to the inlet.

A further aspect of the present disclosure includes that the exit end fitting includes an oil tube exit stub and an exit from the annulus.

A further aspect of the present disclosure includes that the exit is displaced from, and generally parallel to, the supply tube exit stub.

A gas turbine engine frame that defines a hollow vane according to one disclosed non-limiting embodiment of the present disclosure includes a service tube within the hollow vane, the service tube provides a communication path for buffer air, and a communication path for oil, the communication path for buffer air surrounding the communication path for oil.

A further aspect of the present disclosure includes that the gas turbine engine frame is a mid-turbine frame (MTF).

A further aspect of the present disclosure includes that the service tube is insulated.

A further aspect of the present disclosure includes that the communication path for buffer air and the communication path for oil communicate with a bearing compartment.

A further aspect of the present disclosure includes that the communication path for buffer air is an annulus.

A further aspect of the present disclosure includes that the communication path for buffer air is triangular in cross-section.

A method for communicating fluids though a hollow vane of a gas turbine engine frame according to one disclosed non-limiting embodiment of the present disclosure includes communicating oil through a service tube within the hollow vane; and communicating buffer air through the service tube within the hollow vane, the buffer air surrounding the oil within the service tube.

A further aspect of the present disclosure includes insulating the service tube.

A further aspect of the present disclosure includes communicating the oil and buffer air to a bearing compartment through the service tube.

A further aspect of the present disclosure includes communicating the buffer air through an annulus.

A further aspect of the present disclosure includes that the annulus is formed by the service tube.

The foregoing features and elements may be combined in various combinations without exclusivity, unless expressly indicated otherwise. These features and elements as well as the operation of the invention will become more apparent in light of the following description and the accompanying drawings. It should be appreciated, however, the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
FIG. 1 is a schematic cross-section of a gas turbine engine.
FIG. 2 is a schematic view of an engine case such as a MTF for use in the gas turbine engine shown in FIG. 1.
FIG. 3 is an exploded view of the MTF.
FIG. 4 is a sectional view of the MTF.
FIG. 5 is a longitudinal sectional view of the MTF showing a support strut through a vane.
FIG. 6 is a longitudinal sectional view of an MTF showing a service tube through a vane according to one embodiment.
FIG. 7 is an expanded sectional view of the service tube of FIG. 6.
FIG. 8 is a sectional view of the service tube taken along line 8-8 in FIG. 7.

### DETAILED DESCRIPTION

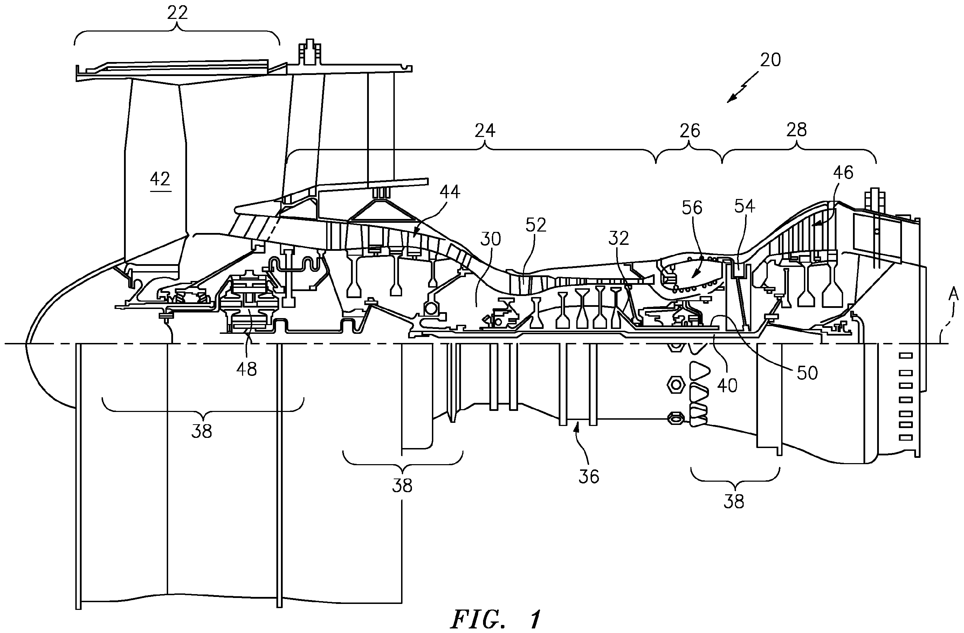

FIG. 1 schematically illustrates a gas turbine engine 20. The gas turbine engine 20 as disclosed herein has a two-spool turbofan that generally incorporates a fan section 22, a compressor section 24, a combustor section 26 and a turbine section 28. The fan section 22 drives air along a bypass flowpath while the compressor section 24 drives air along a core flowpath for compression and communication into the combustor section 26 then expansion through the turbine section 28. Although depicted as a turbofan in the disclosed non-limiting embodiment, it should be appreciated that the concepts described herein are not limited only thereto.

The engine 20 generally includes a low spool 30 and a high spool 32 mounted for rotation around an engine central longitudinal axis A relative to an engine static structure 36 via several bearing compartments 38. The low spool 30 generally includes an inner shaft 40 that interconnects a fan 42, a low pressure compressor 44 ("LPC") and a low pressure turbine 46 ("LPT"). The inner shaft 40 drives the fan 42 directly or through a geared architecture 48 to drive the fan 42 at a lower speed than the low spool 30. An exemplary reduction transmission is an epicyclic transmission, namely a planetary or star gear system. The high spool 32 includes an outer shaft 50 that interconnects a high pressure compressor 52 ("HPC") and high pressure turbine 54 ("HPT"). A combustor 56 is arranged between the HPC 52 and the HPT 54. The inner shaft 40 and the outer shaft 50 are concentric and rotate around the engine central longitudinal axis A which is collinear with their longitudinal axes.

Core airflow is compressed by the LPC 44 then the HPC 52, mixed with fuel and burned in the combustor 56, then expanded over the HPT 54 and the LPT 46. The turbines 54, 46 rotationally drive the respective low spool 30 and high spool 32 in response to the expansion. The main engine shafts 40, 50 are supported at a plurality of points by the bearing compartments 38. It should be appreciated that various bearing compartments 38 at various locations may alternatively or additionally be provided.

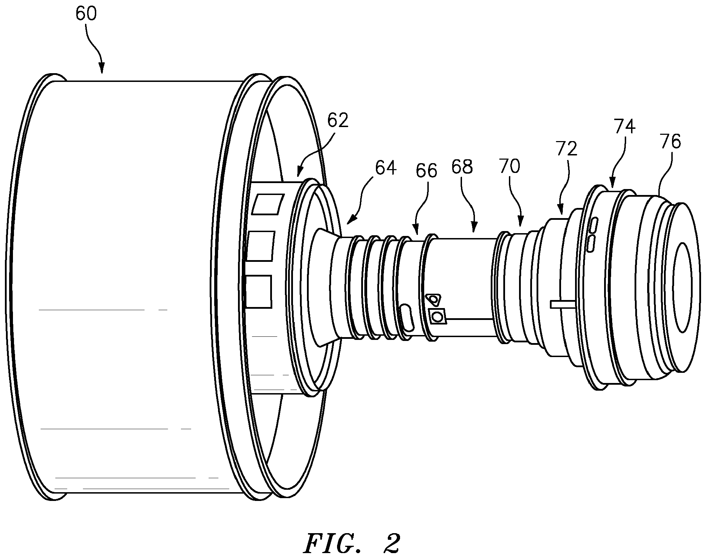

With reference to FIG. 2, the engine case assembly 36 generally includes a plurality of modules, including a fan case module 60, an intermediate module 62, a LPC case module 64, a HPC module 66, a diffuser module 68, a HPT module 70, a mid-turbine frame (MTF) module 72, a LPT module 74, and a turbine exhaust case (TEC) module 76. It should be understood that additional or alternative modules might be utilized.

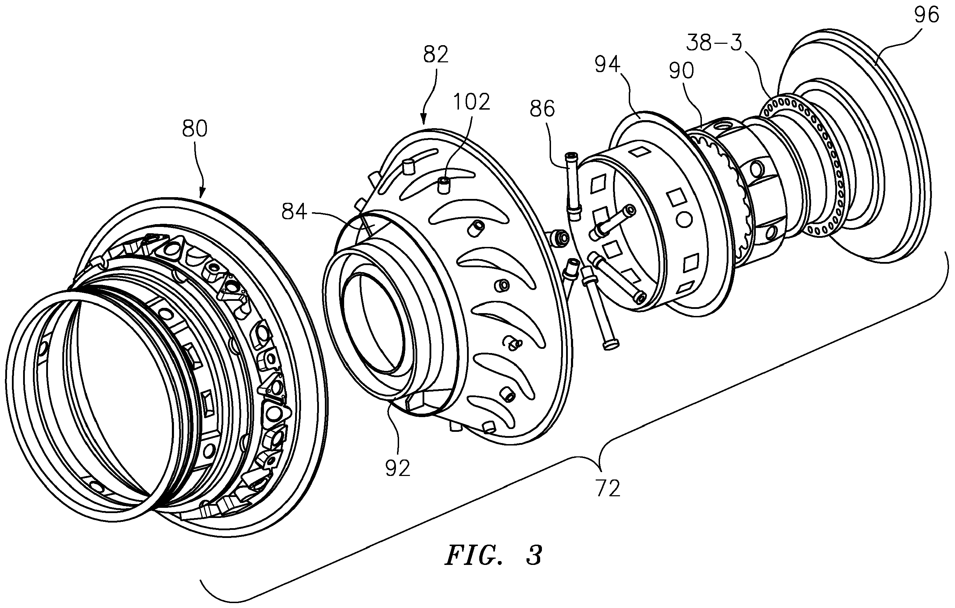

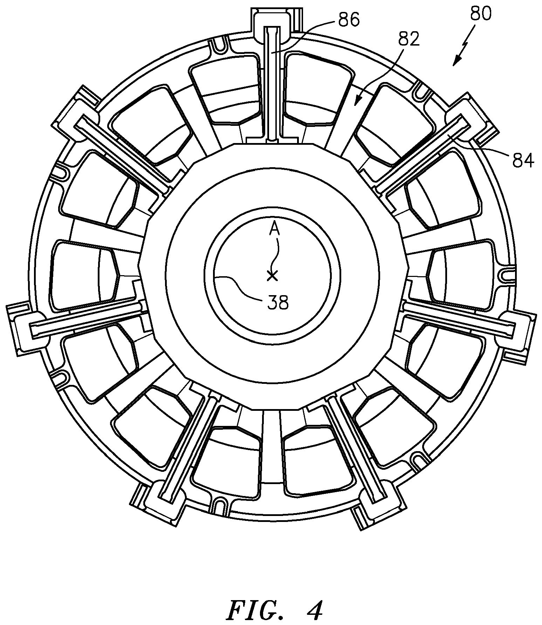

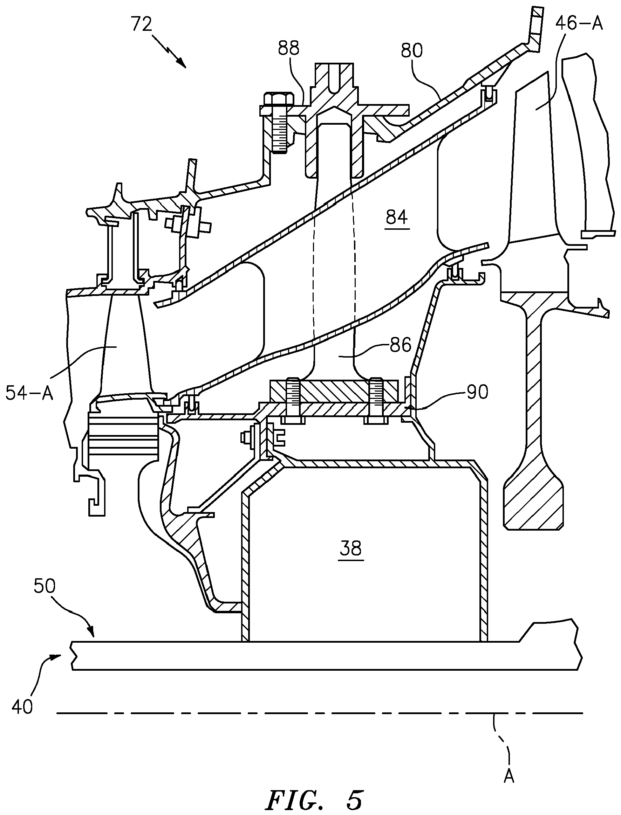

With reference to FIG. 3, the MTF module 72, in this example, generally includes an outer MTF case 80, a mid-turbine frame (MTF) 82 with a multiple of hollow vanes 84 (also shown in FIG. 4), a multiple of tie rods 86, a multiple of tie rod nuts 88, an inner case 90, a HPT seal 92, a heat shield 94, a LPT seal 96, a multiple of centering pins 98, and a borescope plug assembly 100. The MTF module 72 supports a mid-bearing compartment 38 through which the inner and outer shafts 40, 50 are rotationally supported (FIG. 5).

With reference to FIG. 5, each of the tie rods 86 are mounted to the inner case 90 and extend through a respective vane 84 to be fastened to the outer MTF case 80 with one of the multiple of tie rod nuts 88 that are at least partially received into a respective feature 89 formed in the outer MTF case 80. That is, each tie rod 86 is typically sheathed by a vane 84 through which the tie rod 86 passes (FIG. 4 and 5). The multiple of centering pins 98 are circumferentially distributed between the vanes 84 to engage bosses 102 on the MTF 82 to locate the MTF 82 with respect to the inner case 90 and the outer MTF case 80.

One or more of the other vanes 84 may alternatively or additionally provide a service path for buffer air and oil communication to a bearing compartment 38. The bearing compartment 38 may be, for example, a mid-bearing compartment that is typically subjected to higher temperatures due to proximity to the turbine section.

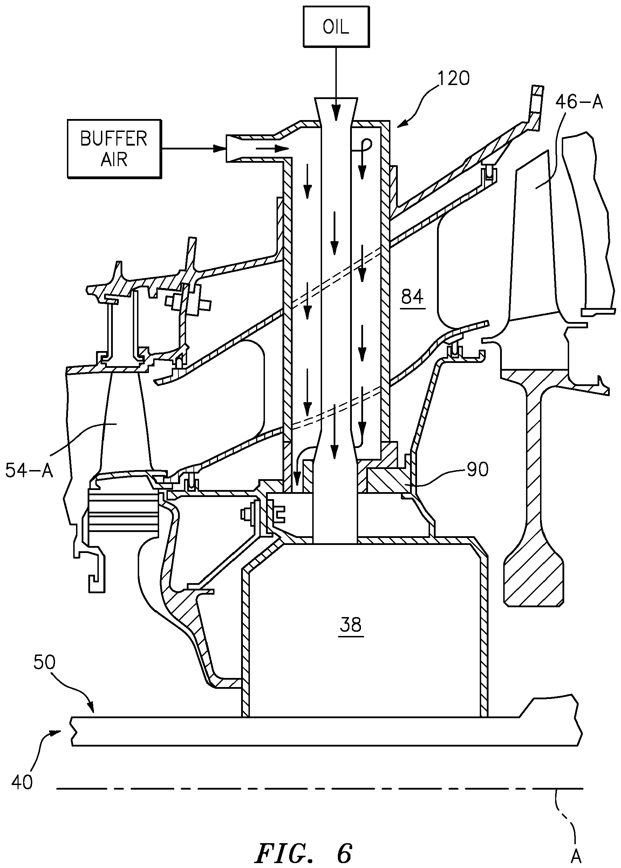

With reference to FIG. 6, a service tube 120, according to one non-limiting embodiment, is located within one or more hollow vanes 84 to reduce the number of individual internal service lines. The service tube 120 provides an integrated path to supply the bearing compartment 38 with buffer air and oil. The service tube 120 thereby reduces weight over individual conduits.

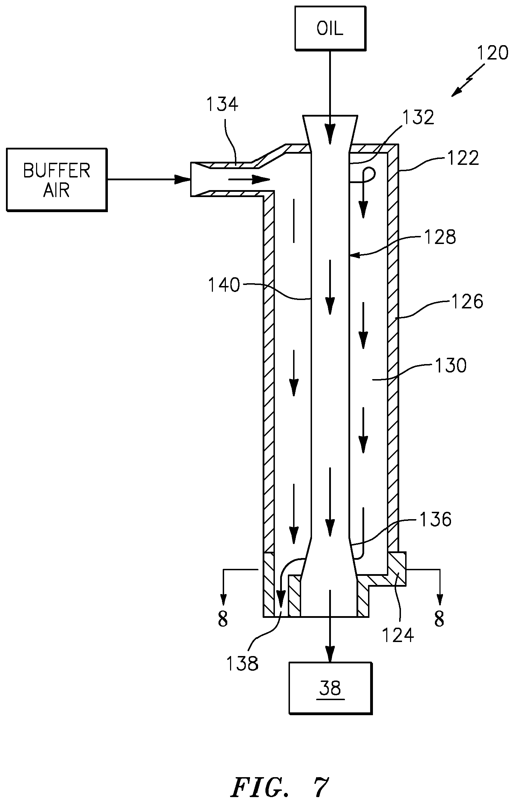

With reference to FIG. 7, the service tube 120 includes an entry end fitting 122, an exit end fitting 124, a housing 126, and an oil tube 128. The entry end fitting 122, the exit end fitting 124, and the housing 126, define an annulus 130 around the oil tube 128. The annulus 130 provides a communication path for buffer air, and the oil tube 128 provides a communication path for oil. The buffer air in the annulus thereby sheathes the oil in the oil tube 128.

The entry end fitting 122 includes an oil tube entry stub 132, and an inlet 134 for the annulus 130. In one example, the oil tube entry stub 132 is transverse to the inlet 134.

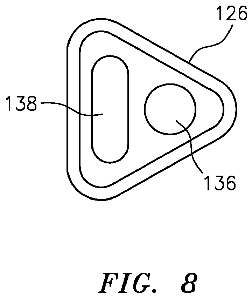

The exit end fitting 124 includes an oil tube exit stub 136 and an exit 138 from the annulus 130. In one example, the exit 138 is displaced from, and generally parallel to, the supply tube exit stub 136 (FIG. 8).

The oil tube entry stub 132 and the oil tube exit stub 136 are interconnected by an oil tube section 140 of the oil tube 128. The entry end fitting 122 and the exit end fitting 124 are interconnected by the housing 126.

The housing 126 may be insulated to minimize thermal transfer of heat from the turbine section to the buffer air within the annulus 130. In one example, the housing 126 has a generally triangular cross-section (FIG. 8), however other cross-sectional shapes may alternatively be provided to facilitate, for example, receipt within the vanes 84 or other structure that typically crosses a flow path within the engine such as the core flow path. The flow of buffer air around the inner oil tube 128 maintains the oil at a relatively lower temperature and reduces the potential for the formation of coke on internal surfaces. This reduction of coking increases on wing time for the engine because coking can reduce oil flow to the bearing, block the oil nozzles and dampers, and/or reduce the scavenge capacity by blocking the flow area.

Although the different non-limiting embodiments have specific illustrated components, the embodiments of this invention are not limited to those particular combinations. It is possible to use some of the components or features from any of the non-limiting embodiments in combination with features or components from any of the other non-limiting embodiments.

It should be appreciated that relative positional terms such as "forward," "aft," "upper," "lower," "above," "below," and the like are with reference to the normal operational attitude of the vehicle and should not be considered otherwise limiting.

It should be appreciated that like reference numerals identify corresponding or similar elements throughout the several drawings. It should also be appreciated that although a particular component arrangement is disclosed in the illustrated embodiment, other arrangements will benefit herefrom.

Although particular step sequences are shown, described, and claimed, it should be appreciated that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be appreciated that within the scope of the appended claims, the disclosure may be practiced other than as specifically described. For that reason the appended claims should be studied to determine true scope and content.

## Claims

1. A service tube (120) for a gas turbine engine (20), comprising:
an entry end fitting (122);
an exit end fitting (124);
an oil tube (128); and
a housing (126) that interconnects the entry end fitting (122) and the exit end fitting (124) to define an annulus (130) for the oil tube (128).

2. The service tube (120) as recited in claim 1, wherein the service tube (120) is located within a mid-turbine frame (MTF) (82); and/or wherein the service tube (120) is located at least partially within a vane (84).

3. The service tube (120) as recited in claim 1 or 2, wherein the housing (126) is insulated.

4. The service tube (120) as recited in any preceding claim, wherein the housing (126) is triangular in cross-section.

5. The service tube (120) as recited in any preceding claim, wherein the entry end fitting (122) includes an oil tube entry stub (132) and an inlet (134) to the annulus (130), wherein the oil tube entry stub (132) is optionally transverse to the inlet (134).

6. The service tube (120) as recited in any preceding claim, wherein the exit end fitting (124) includes an oil tube exit stub (136) and an exit (138) from the annulus (130), wherein the exit (138) is optionally displaced from and generally parallel to the supply tube exit stub (136).

7. A gas turbine engine frame (82) that defines a hollow vane (84), comprising:
a service tube (120) within the hollow vane (84), the service tube (120) providing a communication path (130) for buffer air, and a communication path (128) for oil, the communication path (130) for buffer air surrounding the communication path (128) for oil.

8. The gas turbine engine frame (82) as recited in claim 7, wherein the gas turbine engine frame (82) is a mid-turbine frame (MTF) (82).

9. The gas turbine engine frame (82) as recited in claim 7 or 8, wherein the service tube (120) is insulated.

10. The gas turbine engine frame (82) as recited in any of claims 7 to 9, wherein the communication path (130) for buffer air and the communication path (128) for oil communicate with a bearing compartment (38).

11. The gas turbine engine frame (82) as recited in any of claims 7 to 10, wherein the communication path (130) for buffer air is an annulus (130), and/or is triangular in cross-section.

12. A method for communicating fluids though a hollow vane (84) of a gas turbine engine frame (82), comprising:
communicating oil through a service tube (120) within the hollow vane (84); and
communicating buffer air through the service tube (120) within the hollow vane (84), the buffer air surrounding the oil within the service tube (120).

13. The method as recited in claim 12, further comprising insulating the service tube (120).

14. The method as recited in claim 12 or 13, further comprising communicating the oil and buffer air to a bearing compartment (38) through the service tube (120).

15. The method as recited in any of claims 12 to 14, further comprising communicating the buffer air through an annulus (130), wherein the annulus (130) is optionally formed by the service tube (120).
